# FASCICULE DE BREVET EUROPEEN

(11) **EP 1 392 124 B1**
(45) Date de publication et mention de la délivrance du brevet: **20.08.2008**
(21) Numéro de dépôt: 02747496.4
(22) Date de dépôt: 03.06.2002
(51) Int. Cl.: A23C 19/05, A23C 19/068

(54) **PROCEDE DE FABRICATION DE FROMAGES ET FROMAGES AINSI OBTENUS**
VERFAHREN ZUR KÄSEHERSTELLUNG UND DABEI HERGESTELLTER KÄSE
METHOD FOR CHEESE MAKING AND NEW TYPES OF CHEESE THUS OBTAINED

(30) Priorité: 01.06.2001 FR 0107270
(43) Date de publication de la demande: 03.03.2004
(73) Titulaire: FROMAGERIES BEL, 75008 Paris (FR)
(72) Inventeur: RENAULT, Cécile, 41360 Lunay (FR); GAULIER, Jean-Paul, F-39570 Montmorot (FR); GOLDSCHMIDT, Benoît, F-41000 Blois (FR)
(74) Mandataire: Bernasconi, Jean Raymond
(86) Numéro de dépôt international: PCT/FR2002/001865
(87) Numéro de publication internationale: WO 2002/096209

(56) Documents cités:
- EP-A- 0 312 359
- FR-A- 2 470 546
- FR-A- 2 778 821
- GB-A- 884 762
- US-A- 5 573 806
- L. MABBIT: "Experiments in cheesemaking without starter" JOURNAL OF DAIRY RESEARCH, vol. 22, 1955, pages 365-373, XP002194789
- B. DEMOTT: "Recovery of milk constituents on a mozarella-like product manufactured from nonfat dry milk and cream by direct acidification at 4 and 35 °C" JOURNAL OF DAIRY SCIENCE, vol. 66, no. 12, 1983, pages 2501-2506, XP002194790 CHAPAIGN, ILLINOIS US
- L. CREAMER: "Effect of acidification of cheese milk on the resultant cheddar cheese" NEW ZEALAND JOURNAL OF DAIRY SCIENCE AND TECHNOLOGY, vol. 20, no. 3, pages 185-203, XP008001745
- DATABASE FSTA [en ligne] INTERNATIONAL FOOD INFORMATION SERVICE (IFIS), FRANFURT/MAIN, DE; VALLE J L E DO ET AL: "Demineralization, pH and acidity during the fermentation/acidification of Mozzarella cheese produced by traditional and direct acidification technologies." Database accession no. 95-1-12-p0117 XP002215604 & COLETANEA DO INSTITUTO DE TECNOLOGIA DE ALIMENTOS 1995 INST. DE TEC. DE ALIMENTOS, CAIXA POSTAL 139, CAMPINAS, SAO PAULO, BRAZIL, vol. 25, no. 1, pages 59-66,
- J. LUCEY: "Importance of calcium and phosphate in cheese manufacture" JOURNAL OF DAIRY SCIENCE, vol. 76, no. 6, 1993, pages 1714-1724, XP002216841 CHAPAIGN, ILLINOIS US

## Description

L'invention concerne un procédé de fabrication de fromages.

Les bases fromagères utilisées présentent un taux de minéralisation qui est celui des fromages à pâte molle et une texture dans l'univers des fromages à pâte pressée.

Dans les procédés classiques de fabrication de fromages a partir de gels coagulés de manière enzymatique sous l'effet de la présure ou de ses succédanés microbiens ou végétaux, la coagulation est toujours obtenue par l'action d'une préparation enzymatique coagulante selon les étapes suivantes :
- standardisation d'un lait en matières grasses et protéines ;
- facultativement, traitement thermique de pasteurisation (72° C - 76° C pendant 0,5 à 2 min) ;
- ajout de ferments lactiques ;
- emprésurage du lait à pH 6,1-6,7 ;
- coagulation (formation d'un gel présure ferme) après 30 à 90 min d'action de la présure (ou d'une autre enzyme coagulante) :
- égouttage en cuves (élimination du lactosérum) fréquemment favorisé par des traitements mécaniques (tranchage du coagulum en grains de caillé de grosseur de 0,5-1 cm et brassage) ;
- moulage/compactage des grains et éventuellement pressage ;
- acidification du caillé en moules pour amener le pH au pH final du fromage situé entre 4,6 et 5,2 ;
- facultativement saumurage ;
- réessuyage et ensemencement de le flore superficielle d'affinage ;
- facultativement affinage et conditionnement.

Au stade d'affinage, le pH du fromage se situe dans une gamme comprise entre 4,6 et 5,2, ce qui implique une acidification du caillé avant l'affinage, cette acidification débute de façon habituelle au stade de t'égouttage pour se terminer au début de l'étape d'affinage ; elle permet au pH du fromage de diminuer de 6,1-6,7 à 4,6-5,2.

La présente invention ne concerne en aucun cas la fabrication de fromages frais qui sont issus d'une coagulation lactique se produisant au point isoélectrique de la caséine (pH 4,6) ; dans ce cas, c'est l'acidification qui entraîne la gélification et non l'action d'une enzyme coagulante.

Par ailleurs, les caillés obtenus par précipitation de la caséine sont fragiles, friables, peu minéralisés (la majorité du calcium étant entraînée par le lactosérum) et ne se prêtent pas à des opérations unitaires plus ou moins intenses d'égouttage et de pressage.

Par opposition, les fromages obtenus par coagulation enzymatique selon les étapes décrites ci-dessus se caractérisent par un pH final de l'ordre de 5,2 et pour les pâtes pressées, une pâte cohérente avec une structure peu déformable après affinage. La coagulation est obtenue essentiellement par l'action d'une préparation enzymatique coagulante de type présure ou ses succédanés microbiens ou végétaux sur un lait peu acide.

Ce type de coagulation confère des caractéristiques particulières au coagulum des fromages à pâte pressée : caillé minéralisé (teneur en calcium/extrait sec dégraissé (ESD) = 2,6 = 3%), élastique, non friable, imperméable, aptitude à une synérèse importante, aptitude à des actions mécaniques (tranchage), chimiques, indispensables pour favoriser l'évacuation du sérum.

La formation de ce type de gel est dépendante de la température, de la concentration en enzymes coagulantes et du pH ; en effet, ce dernier en agissant sur l'équilibre minéral et protéique entre les phases solubles et micellaires, est un paramètre important de la coagulation enzymatique.

La coagulation enzymatique est constituée de deux phases, une phase primaire avec hydrolyse seule de la caséine-K et une phase secondaire où se produit le processus d'agrégation proprement dit quand 85 à 90% des caséines-Kappa ont été hydrolysées.

C'est cette deuxième phase qui est la plus sensible aux variations du pH.

Selon les auteurs de l'ouvrage « Le Fromage, A. Eck, J.C. Gillis ; Ed. Lavoisier, 3ème édition, 1997 », « l'activité enzymatique est accrue pour une acidification limitée du lait comprise entre pH 6,7 et 5,5. Cette évolution impliquerait en théorie d'acidifier les laits destinés à être coagulés par voie enzymatique. En réalité, on ne peut exploiter pleinement cette propriété en raison de la déminéralisation corrélative de la micelle qui conduit à sa déstructuration et à une chute de l'aptitude à l'égouttage.

Pour les fromages à teneur élevée en matière sèche (pâtes dures, pâtes pressées cuites), le pH doit être d'autant moins acide que l'égouttage ultérieur est prononcé, et est généralement compris entre pH 6,55 et 6,75. Pour les fromages à coagulation mixte (pâtes pressées non cuites, pâtes molles), il se situe entre 6,15 et 6,45. Pour les fromages humides, le pH peut évoluer très largement entre 6,0 et 6,70. »

C'est pour ces raisons que traditionnellement l'acidification se fait à un stade post-coagulation, généralement à partir du stade égouttage.

RAMKUMAR a étudié, dans une thèse intitulée : "The effect of pH shift on early cheese maturation" les effets des paramètres de fabrication dont le pH sur l'évolution de systèmes de modèles fromagers de type cheddar au cours de premiers stades d'affinage.

Il a ainsi préparé des fromages-modèles par acidification du lait à l'aide d'acide lactique, jusqu'à l'obtention de différents pH (6,0 à 5,1), suivie d'un emprésurage et d'un égouttage, et d'une étape de cheddarisation.

De manière traditionnelle, pour la fabrication du cheddar, le caillé est chauffé puis égoutté avant de subir une étape de "cheddarisation" dans laquelle le pH passe de 6 à 5,25 environ. Le caillé est ensuite traité mécaniquement, salé puis moulé. Cette étape d'acidification, qui s'effectue sur des cossettes (dans un milieu sec), n'entraîne pas de pertes de calcium dans le lactosérum et aboutit à des fromages ayant une teneur élevée en calcium.

Le procédé testé par RAMKUMAR s'applique à des fromages de type de cheddar qui présentent une texture relativement friable, et une minéralisation élevée en tout état de cause avec un Ca/ESD supérieure à 2 %.

D'une manière générale, la présente invention ne concerne pas la préparation de fromages dont le procédé de fabrication prévoit une acidification de type cheddarisation.

La demande de brevet WO 99/33350 décrit un procédé de fabrication de Mozzarella, selon lequel on fermente au moins une fraction de lait avec au moins une souche bactérienne thermophile et au moins une fraction de lait avec au moins une souche bactérienne mésophile, on ajoute ces fractions à du lait, on coagule le lait ainsi obtenu par ajout de présure, de manière à obtenir un coagulum et l'on sépare le caillé du sérum de manière à obtenir une masse de fromage de type Mozzarella.

Dans ce cas, l'auteur a mis au point un procédé particulier de fabrication de Mozzarella, fromage dont la technologie de production comporte une étape spécifique de filage précédé par une étape similaire à la "cheddarisation" où se produit la baisse de pH nécessaire à l'étape de filage indispensable dans la fabrication de la Mozzarella en ce sens qu'elle lui confère son caractère "filant".

Les auteurs ont eu l'idée de remplacer cette étape d'acidification avant filage, placée en aval de la coagulation, par une étape d'acidification placée en amont de la coagulation. Toutefois, afin d'obtenir un produit ayant les caractéristiques de texture de la Mozzarella traditionnelle, ils ont dû mettre au point un procédé spécifique d'acidification.

Comme dans le cas précédent, il s'agit de fabriquer des fromages selon une technologie qui comporte une étape de "cheddarisation", sans toutefois apporter d'étape d'acidification, à l'inverse du procédé tradtionnel.

Aucun de ces documents ne concerne la mise au point de fromage ayant la texture d'une pâte pressée et la minéralisation d'une pâte molle.

Les bases fromagères utilisées dans l'invention ont un extrait sec élevé et présentant certaines caractéristiques des pâtes pressées, notamment leur texture souple, élastique, non friable et certaines caractéristiques des pâtes molles, notamment leur faible taux de minéralisation.

Le brevet américain US 5573806 décrit un procédé de fabrication de fromage dans lequel la coagulation du lait est réalisée par acidification jusqu'à pH 4,4 sans emprésurage.

Un procédé de fabrication des cheddars dans lequel le lait est acidifié jusqu'à un pH d'environ 5,4, emprésuré, coagulé, traité mécaniquement avant de subir une cheddarisation a été décrit par Mabbit et al. (1955, Journal of Dairy Science, 22, 365-373). Ces fromages sont toutefois friables et fragiles.

La demande de brevet européen EP 0312359 décrit un procédé de fabrication de mozzarella dans lequel le pH du lait est abaissé à 6,0-6,5, pasteurisé, puis à nouveau acidifié jusqu'à pH 5,4-6,0 avant emprésurage.

Demott a décrit un procédé de production de mozzarella qui comprend l'acidification du lait à un pH 5,6, puis l'emprésurage (1983, Journal of Dairy Science, 66, 2501-2506).

La demande de brevet français FR 2470546 décrit un procédé de fabrication par ultrafiltration de fromages qui nécessitent une acidification du lait avant épaississement.

Le brevet anglais GB 884762 a trait à des procédés de préparation de caillé et de caséine.

La demande de brevet français FR 2778821 concerne un procédé de fabrication de produits fromagers obtenus par traitement mécanique et thermique modéré, en présence d'eau, d'un fromage de départ.

Creamer et al. ont décrit des propriétés rhéologiques du cheddar préparé à partir de lait acidifié par de l'acide lactique et de l'acide chlorhydrique (1955, New Zealand Journal of Dairy Science and Technology, 20, 185-203).

Lucey et Fox ont revu l'influence du calcium et du phosphate dans la fabrication des fromages, en particulier dans la coagulation du lait qui enseigne notamment que la déminéralisation du caillé est favorisée par la préacidification du lait (1993, Journal of Dairy Science, 76, 1714-1724).

Un autre but de l'invention est de proposer un procédé de fabrication de fromages qui soit facile à mettre en oeuvre, ne nécessite pas le contrôle d'un grand nombre de paramètres, et ne requiert pas un matériel, une surface de stockage et une main d'oeuvre importants.

Les travaux réalisés par les inventeurs ont à présent montré de façon surprenante que l'on pouvait fabriquer des fromages ayant à la fois un extrait sec élevé, caractéristique d'un égouttage intensif, et une-pâte élastique souple, ceci malgré une faible minéralisation, en procédant , avant l'étape d'emprésurage, à une acidification du lait à des pH inférieurs à ceux-préconisés et habituellement mis en oeuvre en amont'du cycle de fabrication du fromage.

L'invention utilise un produit fromager ayant un extrait sec total compris entre 40 et 60 %, un taux de minéralisation Ca/ESD inférieur à 2 %, et une pâte souple, élastique, non friable, présentant un profil rhéologique qui est sensiblement similaire à celui des fromages à pâte pressée.

Les produits fromagers peuvent avoir en outre une concentration d'acide lactique non supérieure à 300 mg/100 g de pâte fromagère, alors que pour les pâtes molles ou pressées traditionnelles. celle-ci est de l'ordre de 1 200 mg/100 g de fromage.

Ainsi, les produits fromagers utilisés selon l'invention possèdent un faible pouvoir tampon qui permet une bonne implantation de la flore de surface.

Dans la fabrication de produits fromagers ayant la texture d'une pâte pressée, on réalise une acidification du lait pour atteindre une valeur de pH comprise entre 5,2 et 5,8, avantageusement entre 5,2 et 5,5, et réalise la coagulation par addition au lait d'une préparation enzymatique coagulante à ladite valeur de pH.

Dans la suite du texte, on entend par :
- "fondant" : une sensation qui se dégage quand un échantillon de fromage forme une pâte avec la salive et fond de manière continue ;
- "produits fromagers" : les produits obtenus par gélification de lait ou de concentrés laitiers à l'aide d'une enzyme coagulante ;
- ESD : l'extrait sec dégraissé.
- EST : extrait sec total.

Le lait utilisé pour le procédé de l'invention peut consister en laits, mélanges de laits ou concentrés laitiers provenant de différentes espèces de mammifères (vache, brebis, chèvre, bufflesse, etc...) ; la substitution partielle ou totale des fractions lipidiques et protéiques du lait par des matières protéiques ou lipidiques végétales fait partie du domaine de l'invention.

Le lait est avantageusement standardisé en matière grasse et en protéines, de préférence pasteurisé (72°C - 76°C pendant 0,5-2 min) ; ce lait subit une étape d'acidification jusqu'à l'obtention d'un pH compris entre 5,2 et 5,8, avantageusement 5,2 et 5,5.

Cette technique va permettre d'emprésurer le lait acidifié à un pH relativement bas, tout en évitant une acidification lors du travail en cuve. Cette acidification est réalisée par plusieurs méthodes.

Selon un premier mode de réalisation de l'invention, l'acidification est réalisée en deux étapes. Dans une première étape, l'acidification du lait est réalisée par une addition d'une quantité comprise entre 1 et 3% en poids de bactéries acidifiantes mésophiles et/ou thermophiles, par rapport au poids total de lait, que l'on laisse agir pendant une durée comprise entre 30 min et 10 heures jusqu'à obtention d'un pH de 5,6-5,9. Une fois les pH atteints, on fait subir au lait "acidifié" un traitement qui bloque le développement des ferments pendant tout le travail en cuve, par exemple un traitement thermique ou des traitements athermiques tels que les champs électriques pulsés, les ultrasons, techniques membranaires, ou autres techniques appropriées, etc ... La durée d'acidification variable dépend des souches fermentaires employées et les conditions de fermentation.

La deuxième étape d'acidification est réalisée par une addition d'un agent acidifiant compatible avec l'alimentation jusqu'à obtention d'un pH compris entre 5,2 et 5,8, avantageusement 5,2 et 5,5.

L'agent acidifiant doit être compatible sur le plan alimentaire et consiste avantageusement en un acide organique (acide lactique, glucono-δ-lactone, etc).

Selon un deuxième mode de réalisation de l'invention, l'étape d' acidification du lait est réalisée par une addition d'une quantité comprise entre 0,2 et 0,5% en poids d'un acide organique compatible avec l'alimentation, par rapport au poids total du lait, jusqu'à obtention d'un pH compris entre 5,2 et 5,8, avantageusement 5,2 et 5,5.

L'acide organique est avantageusement l'acide lactique ou l'acide citrique.

Le pH est régulé dans ce cas par la quantité d'acide ajoutée.

Selon un troisième mode de réalisation de l'invention, l'étape d' acidification du lait est réalisée par addition dans un rétentat laitier d'une quantité de perméat laitier préalablement acidifié à pH 4-5 jusqu'à obtention du pH désiré compris entre 5,2 et 5,8 avantageusement 5,2 et 5,5.

Le perméat est obtenu au moyen bien connu de l'ultrafiltration. L'acidification du lait est dans ce cas rapide du fait du faible pouvoir tampon du sérum.

Ainsi, pour obtenir 100 I de lait à pH 5,4, on mélange 83 I de perméat à pH 4,0 (4 g/l d'acide lactique) et 17 l de rétentat (facteur de concentration volumique = 6). Le lait ainsi acidifié est ensuite transformé selon le procédé traditionnel de fabrication des fromages de type pâte pressée.

Une fois le pH désiré atteint, compris entre 5,2 et 5,8, avantageusement 5,2 et 5,5, on ajoute la quantité de présure nécessaire à la coagulation ; la quantité est comprise entre 8 et 35 ml/100 I.

Lorsque l'on ajoute des préparations enzymatiques autres, on ajoute une quantité ayant une activité enzymatique équivalente à celle de la quantité de présure mentionnée ci-dessus.

A ces pH, les micelles de caséine sont "déstabilisées", ce qui permet sous l'action de la présure ou ses variantes leur liaison entre elles de façon d'autant plus rapide que le pH d'emprésurage est bas et la température élevée.

Au cours de l'acidification, les micelles de caséine subissent des changements structuraux (déminéralisation, solubilisation, puis réarrangement, variation de l'hydratation) ; plus l'acidification est forte, plus les micelles vont se trouver dans un état instable. La structure de la micelle va conditionner le mode d'action de la présure et engendrer la formation de gels aux textures originales.

La coagulation s'effectue en régime statique ou sous agitation en un temps compris entre 5 et 30 min alors que traditionnellement à pH 6,1-6,7, la coagulation d'effectue entre 30 et 90 min.

Selon le mode d'obtention du coagulum, sous agitation ou non, celui-ci est soit directement moulé, soit égoutté après tranchage et moulage.

Le caillé égoutté mis en moule peut subir un léger pressage qui a pour but de mettre en forme le produit. Toutefois cette étape n'est pas nécessaire.

Le profil rhéologique ne fait apparaître qu'un seul pic tant à J+1 après la fabrication qu'à 30 jours (J+30) suivant la fabrication, ce qui témoigne d'une absence de rupture de la pâte (taux de compression de 75 %).

Les produits obtenus présentent des caractéristiques rhéologiques (souplesse du produit, cohésion du produit et fermeté du produit) différentes de celles d'un fromage obtenu par la voie traditionnelle.

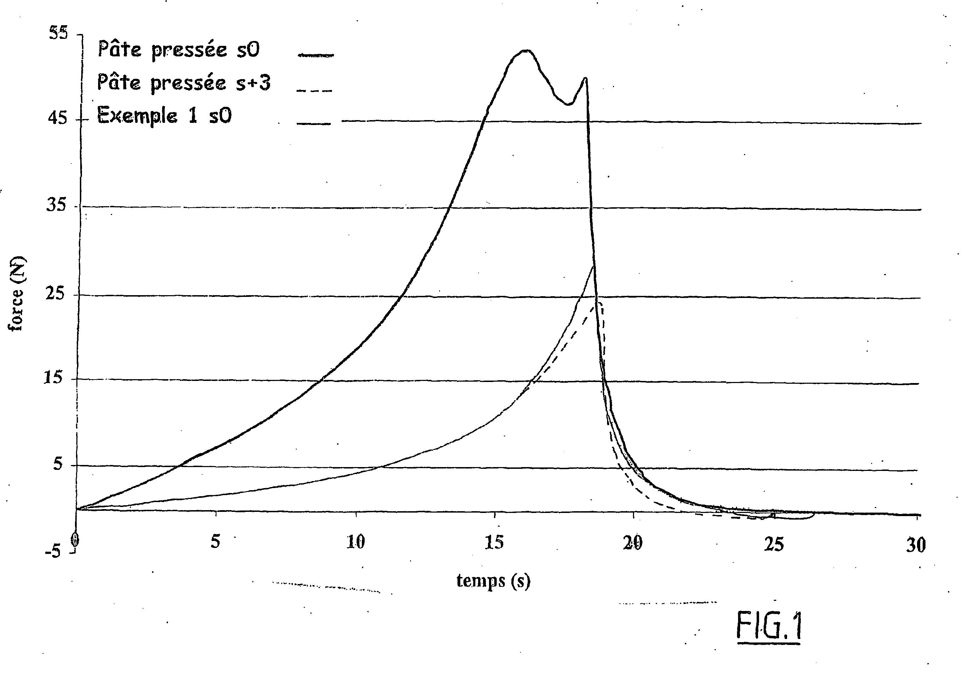

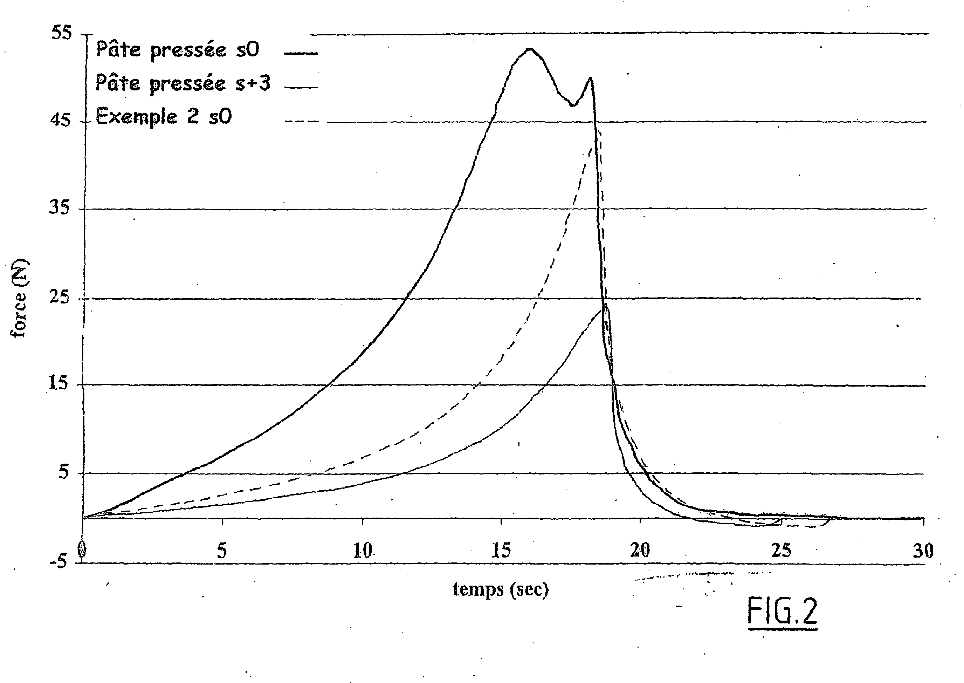

Alors que la force à la rupture est identique quelle que soit la technologie, il existe de grandes différences en ce qui concerne :
- la déformation à la rupture : les produits utilisés selon le procédé de l'invention se déforment moins et ne rompent pas sous la déformation à J+1 comme à J+30 alors que les fromages à pâte pressée obtenus selon la technologie traditionnelle présente un double pic à J+1 suivant la fabrication, ce qui témoigne d'une rupture de la pâte lorsque celle-ci est soumise à une déformation (figures 1 et 2) ;
- la pente à l'origine : les produits obtenus selon le procédé de l'invention sont beaucoup plus souples que les fromages à pâte pressée obtenus selon la technologie traditionnelle, notamment à J + 1.

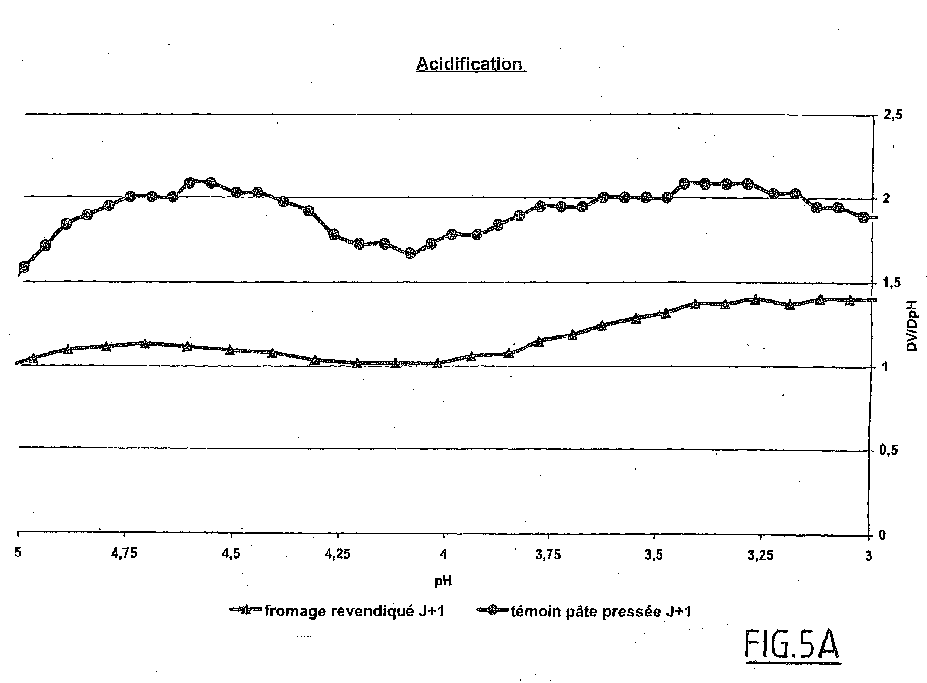

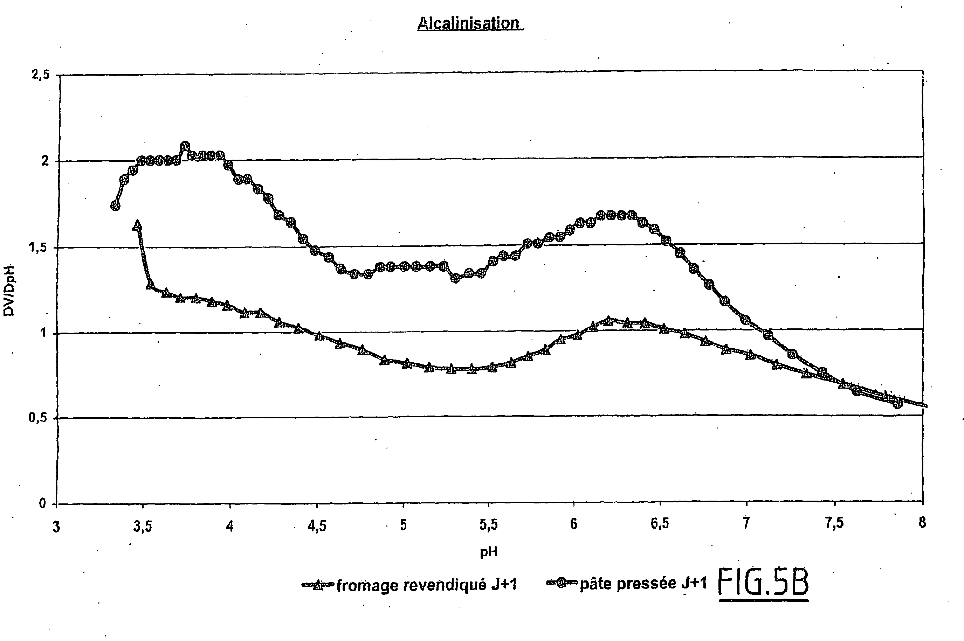

Dans le cas de fromages affinés à croûte naturelle, l'implantation de la flore de surface est favorisée par le faible pouvoir tampon du fromage provenant de la minéralisation peu importante (figure 5).

A l'analyse sensorielle, les produits se révèlent plus fondants que leurs homologues obtenus par voie traditionnelle.

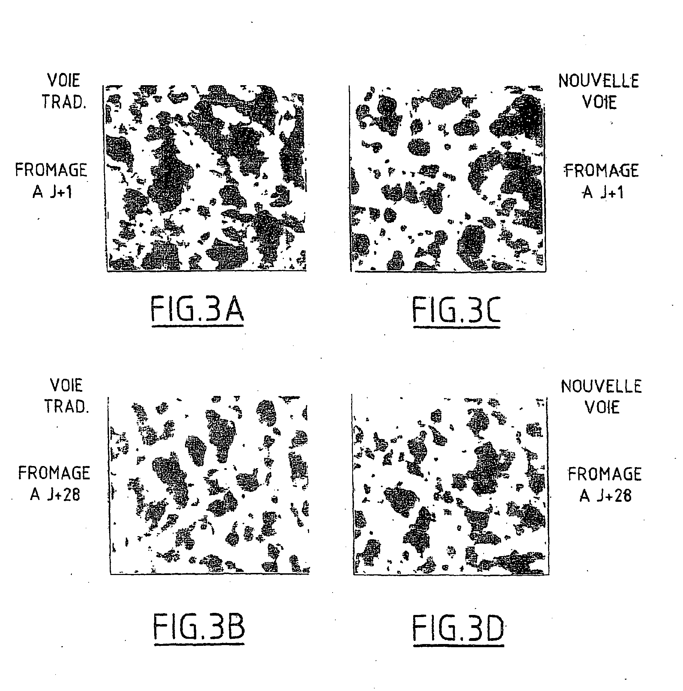

Par ailleurs, des analyses par microscopie confocale, sur des produits où l'emprésurage est effectué à des pH de 5,0 à 5,6 montrent que le procédé de l'invention conduit au développement dès J + 1 de produits à matrice protéique homogène, proche de celle d'un produit référent âgé de 30 jours obtenu par emprésurage à pH 6,1-6,5 (figure 3).

On voit tout l'intérêt du procédé de fabrication dans l'obtention de nouveaux fromages et dans la maîtrise des procédés de fabrication.

Les produits obtenus peuvent être de tous formats, tous grammages, issus de tout type de lait, à teneur variable en matière grasse, présenter une croûte sèche ou une flore de surface, être enrobés sous tous matériaux d'enrobage connus (cires, substituts de cire, enrobage comestible), être emballés après développement d'une flore superficielle sous tous types d'emballages traditionnellement employés en fromagerie tels que matériau souple complexe, pellicule, papier paraffiné, boîte, emballage rigide, etc...

La présente demande concerne l'utilisation des produits fromagers décrits ci-dessus comme base fromagère pour la préparation de fromages à texture cohésive, souple, homogène, ayant des goûts variés.

Comme expliqué ci-dessus, ces produits fromagers se caractérisent notamment par un profil rhéologique similaire à celui d'une pâte pressée et par sa faible teneur en acide lactique (10 fois moins qu'un fromage jeune standard type Gouda de deux semaines). Un avantage particulier de ces fromages est qu'ils présentent dès J + 1 une matrice protéique homogène proche de celle d'un produit référent âgé d'au moins 15 jours, de préférence environ 30 jours, obtenu par un procédé traditionnel.

A J + 1, le produit fromager se caractérise en outre par sa couleur blanche et un goût neutre. Ces caractéristiques sont maintenues tant que le produit fromager ne subit pas de maturation, soit entre J + 1 et J + 7.

Cet état est obtenu avantageusement par acidification du lait par ajout d'acide alimentaire avant emprésurage.

Dans le cadre de la présente invention, on appelle "base fromagère" un produit ayant les caractéristiques texturales et une matrice protéique entre J+1 et J+7 proches de celles d'un produit fromager obtenu par voie traditionnelle âgé d'au moins 15 jours, préférentiellement d'au moins 20 jours, préférentiellement encore d'au moins 30 jours. Avantageusement, cette base fromagère neutre en goût peut être additionnée de composés aromatiques et/ou éléments figurés sans interférer avec la perception aromatique des composés qui lui sont ajoutés.

Du fait de sa texture similaire à celle d'une pâte pressée affinée d'au moins 15 jours, la base fromagère est apte à être transformée par un procédé de retexturation tel que décrit dans la demande de brevet internationale WO 99/59 419 (la demande francaise FR-A-2778821 est un membre de la même famille de brevets). Le procédé objet de la demande WO 99/59 419 concerne la transformation de fromages traditionnels, en particulier les fromages ayant un EST> 40 %, en produits fromagers ayant les qualités aromatiques du produit de départ et une texture souple, élastique. La transformation de la base fromagère selon l'invention, avantageusement additionnée de tous composés aromatiques issus de matières animales tels que des fromages naturels ou fondus, et/ou de matières premières végétales telles que des purées de légumes ou de fruits, et/ou d'éléments figurés, par un procédé tel que décrit dans la demande WO 99/59 419 fournit ainsi des fromages à texture cohésive et souple ayant des goûts variés.

L'invention propose donc un procédé de fabrication de fromages à texture souple, élastique comprenant les étapes consistant à:
a) obtenir une base fromagère constituée par un produit fromager avant un extrait sec total compris entre 40 et 60 %, un taux de minéralisation Ca/ESD inférieur à 2 %, et une pâte souple élastique, non friable, présentant un profil rhéologique qui est sensiblement similaire à celui des fromages à pâte pressée ;
b) traiter thermiquement et mécaniquement par un traitement mécanique de type pétrissage, la base fromagère à une température T₁ d'au plus 70°C;
c) refroidir à une température T2 comprise entre T1 - 8°C et T1 - 20°C.

L'invention propose donc un procédé de fabrication de fromages à texture souple, élastique, comprenant les étapes consistant à:
a) obtenir une base fromagère constituée par un produit fromager agé de 1 à 7 jours, ayant un extrait sec total compris entre 40 et 60 %, un taux de minéralisation Ca/ESD inférieur à 2 %, et une pâte souple élastique, non friable, présentant un profil rhéologique qui est sensiblement similaire à celui des fromages à pâte pressée, par un procédé comprenant les étapes consistant à acidifier un lait pour atteindre une valeur de pH comprise entre 5,2 et 5,8 et à réaliser la coagulation par addition au lait d'une préparation enzymatique coagulante à ladite valeur de pH, ledit procédé ne comprenant pas d'étape d'acidification de type cheddarisation ni d'étape supplémentaire d'acidification sur le caillé;
b) éventuellement ajouter à cette base des éléments tels que des composés aromatiques, des éléments nutritionnels, des éléments figurés, des fromages de type pâte pressée, pâte molle, fromage fondu, fromage frais, des yaourts, des caillés frais, afin de conférer au produit final les caractéristiques aromatiques de ces éléments ;
c) traiter thermiquement et mécaniquement par un traitement mécanique de type pétrissage, la base fromagère ou le mélange à une température T₁ d'au plus 70°C, de préférence comprise entre 25 et 70°C, de préférence encore comprise entre 40 et 70°C ;
d) refroidir à une température T₂ comprise entre T₁ - 8°C et T₁ - 20°C ;
e) éventuellement mettre en forme le produit final ;
f) éventuellement conditionner le produit ainsi obtenu, les étapes c) et d) étant réalisées en additionnant environ 7 à 20 % d'eau en poids par rapport au poids de la base fromagère.

L'étape c) est réalisée avantageusement en soumettant la base fromagère de départ, préalablement mise sous forme de morceaux, brins ou semoules, et à laquelle un ou des produits ont éventuellement été rajoutés conformément à l'étape b), à un traitement thermique doux consistant à chauffer le produit de départ à une température comprise entre 25 et 70°C pendant une durée comprise entre 20 secondes et 3 minutes, tout en assurant un brassage de la pâte à une vitesse comprise entre 100 et 600 t/min, avec une vitesse de cisaillement comprise entre 10 et 200 s⁻¹. Cette étape est réalisée dans tout appareil approprié. On peut citer les systèmes à injection de vapeur tels que les cutters employés en charcuterie ou en technologie de fromage fondu et les pétrins de boulangerie.

La température de refroidissement de l'étape d) est généralement comprise entre 10 et 60°C, de préférence comprise entre 25 et 50°C, dépend de la température initiale de traitement thermique. La pâte est alors éventuellement transférée dans un dispositif à vis sans fin , où elle subit un traitement mécanique simple de poussée sans autre effet. Le produit est alors positionné sur une formatrice où les produits finis sortent sous forme variée (billes, formes cylindriques, ovoïdes, par exemple). On peut alors, si nécessaire, effectuer un complément de refroidissement du produit.

De façon tout à fait avantageuse, le procédé d'obtention des produits finis incluant l'étape de préparation de la base fromagère (a) peut être réalisé dans une période n'excédant pas 15 jours, de préférence inférieure à 7 jours. Plus avantageusement encore, le procédé est mis en oeuvre pendant une période comprise entre 24 et 48 heures,

La "base fromagère" peut être conservée au froid (5-8°C) avant la mise en oeuvre des étapes b) et suivantes du procédé, ceci afin de limiter son évolution. De cette manière, elle ne subira aucune maturation.

Les composés aromatiques ajoutés à la base fromagère sont choisis dans la famille des caillés lactiques, du yaourt ou tout autre produit fermenté, des fromages affinés, de concentrés aromatiques de fromages tels que les EMC (*"Enzyme-modified-cheese"*), par exemple, en quantités variables selon l'intensité aromatique finale que l'on veut obtenir. On peut également ajouter des éléments figurés, du fromage fondu, des éléments nutritionnels et aromatiques, ou encore des texturants.

Par "éléments figurés", on entend des éléments qui présentent une forme, une texture, une couleur, ou un goût reconnaissable au sein du produit fromager. On citera, à titre d'exemples d'éléments figurés, l'ail, le persil, le poivre, l'échalote, le cumin, les éclats de noix, les noisettes, les copeaux de légumes ou de fruits.

Dans la mesure où la base fromagère est neutre, le produit final aura les caractéristiques gustatives des composés aromatiques ajoutés.

Le procédé selon l'invention permet ainsi de fabriquer, en un temps très court par rapport à un procédé traditionnel, une grande diversité de produits, de formes et grammage variés, à texture homogène, souple, élastique, tranchable et croquable, des composantes aromatiques variées. Ces produits présentent les caractéristiques de texture, voire de goût (selon les composés aromatiques utilisés), similaires à celles d'un fromage ou d'une spécialité fromagère maturés pendant au moins 10 jours, tels que des fromages de type Gouda, St Paulin, cheddar jeune, Maasdam jeune, mais aussi des fromages ou spécialités fromagères aromatisés par des aromates traditionnels, tels que l'ail, le persil, l'échalote, le poivre, le cumin, ou par d'autres éléments figurés.

De plus, dans le cas de l'ajout d'aromates ou d'éléments figurés, ce procédé évite toute perte de ces ingrédients dans le lactosérum, dans la mesure où ils sont ajoutés à un produit égoutté.

On peut citer à titre d'exemples de produits finis :
- un produit comprenant 98 % de "base fromagère" (A), 0,8 % d'arôme de tomate et 0,5 % de tomates déshydratées ;
- un produit comprenant 79 % de "base fromagère" (A), 20 % de fromage fondu et 1 % d'emmental ;
- un produit comprenant 70 % d'une "base fromagère" neutre (A) et 30 % d'une pâte pressée de type Gouda âgée de 5 semaines.

Ce procédé est donc particulièrement intéressant pour l'industrie laitière du point de vue économique, puisqu'il permet de produire rapidement des produits fromagers variés en goût et ceci à partir d'une matière première unique.

L'invention sera mieux comprise à l'aide de l'exemple comparatif ci-dessous et aux figures annexées sur lesquelles :
- la Figure 1 relative à l'exemple 1 représente les profils rhéologiques d'un produit fromager utilisé dans l'invention immédiatement après sa fabrication (s0) et d'un fromage obtenu selon un procédé traditionnel (emprésurage à pH 6,1-6,7) immédiatement après sa fabrication (s0) et trois semaines après sa fabrication (s+3) ;
- la Figure 2 relative à l'exemple 2 représente les profils rhéologiques d'un produit fromager utilisé dans l'invention immédiatement après sa fabrication (s0) et d'un fromage obtenu selon un procédé traditionnel (emprésurage à pH 6,1-6,7) immédiatement après sa fabrication (s0) et trois semaines après sa fabrication (s+3) ;
- la Figure 3 représente des photographies en microscopie confocale de la structure protéique de fromages obtenus par voie traditionnelle à J+1 (fig. 3A), à J28 (fig. 3B) et les produits fromagers utilisés dans l'invention à J+1 (fig. 3C) et J28 (fig. 3D) ;
- la Figure 4 représente un graphe illustrant la relation entre le rapport Ca/ESD et la consommation d'acide lactique pour des fromages traditionnels à pâte molle, des fromages traditionnels à pâte pressée, et les produits fromagers utilisés dans l'invention;
- la Figure 5 représente les courbes d'acidification (fig. 5A) et d'alcalinisation (fig 5B) pour des fromages à pâte pressée traditionnels et des produits fromagers utilisés dans l'invention à J+1.

Ces courbes de pouvoir tampon illustrent le fait que l'on obtient des produits ayant une très faible minéralisation (élimination de minéraux solubles au moment de l'égouttage).

Le protocole expérimental utilisé pour la mesure des caractéristiques rhéologiques du fromage est le suivant.

Des échantillons de fromages à différents stades de leur conservation sont prélevés à l'emporte-pièce en vue de l'analyse rhéologique (cylindre de 17 mm de diamètre et 20 mm de hauteur). Les analyses sont réalisées sur une machine universelle de compression/traction Instron 4301. Les mesures sont effectuées entre une plaque inférieure fixe et une sonde mobile, toutes deux de géométrie plane et recouvertes d'un papier lubrifiant de type Parafilm. La sonde axiale cylindrique d'axe vertical possède un diamètre de 59 mm. Le test appliqué est un test "TPA" (Texture Profil Analysis) ; il est caractérisé par deux cycles identiques de compression uni-axiale avec un temps de repos entre les deux. Le taux de compression appliqué sur l'échantillon de fromage est de 75% à une vitesse de 50 mm/min. On mesure la force (contrainte) en fonction du déplacement de la sonde. Différents points caractéristiques sont extraits des courbes obtenues dont un exemple de tracé est présenté ci-dessous : la force à 50% de déformation, la force à la rupture et la force à 75% de compression, la déformation à la rupture, la pente initiale et enfin, les différents paramètres issus d'une analyse informatisée obtenue au moyen d'un logiciel ; il s'agit de la cohésion (rapport des deux aires positives) et de l'élasticité (rapport des hauteurs des deux pics).

Pour chaque fromage analysé, trois mesures sont réalisées à partir de trois échantillons différents. Les paramètres analysés seront donc la moyenne de trois essais.

En ce qui concerne le choix des réponses issues des mesures rhéologiques (test TPA), seules les réponses concernant la première compression ont été exploitées. En effet, l'interprétation des données rhéologiques telles que l'élasticité (h2/h1) ou la cohésion (A2/A1), sur des produits allant de très souples à très cassants, est à éviter (Creamer -et al., 1985) et le comportement au-delà de la rupture est très aléatoire.

Le protocole expérimental utilisé pour la mesure du pouvoir tampon est le suivant :

Des échantillons de fromages sont prélevés à l'emporte pièce et homogénéisés en milieu aqueux. On ajoute ensuite progressivement de l'acide chlorhydrique et on observe pour une quantité d'acide chlorhydrique donnée ajoutée, la variation de pH du milieu.

Lorsque le pH est d'environ 3,5, on ajoute inversement une base (NaOH) et on mesure pour une quantité donnée de NaOH la variation du pH du milieu.

Les exemples 1 à 3 ne sont pas selon l'invention

### EXEMPLE 1

On prépare un produit fromager de type pâte pressée.

Pour ce faire, on fermente le lait pendant 7 h à 25° C jusqu'à un pH de 6,0 avec 2% de ferments mésophiles.

On traite thermiquement le lait fermenté ainsi obtenu à 55° C pendant 1 min. On ajoute ensuite de l'acide lactique de manière à obtenir un lait à pH 5,45.

On coagule le lait pendant 10 min par ajout de 0,015% de présure de force 1/10000^{ème} de manière à obtenir un coagulum que l'on découpe en morceaux et que l'on brasse en cuve. On réalise ainsi des grains de caillé.

Depuis l'étape de coagulation jusqu'à l'étape de soutirage, on maintient la température du milieu à 30° C.

On sépare ensuite le sérum du grain de caillé de manière à obtenir un pain de caillé que l'on découpe en unités de 200 g.

On presse les unités de 200 g pendant 30 min. Ensuite ces fromages de type pâtes pressées sont baignés dans une solution de saumure pendant 2 h 30.

Après 12 h de séchage à 12° C, ces fromages sont paraffinés et conservés à 4° C.

Les fromages obtenus ont les caractéristiques physico-chimiques suivantes :

| | Exemple 1 | Procédé de l'état de la technique (voie traditionnelle) |
|---|---|---|
| EST (g/100 g) | 50,6 | 54,5 |
| MG (g/100 g) | 26,3 | 28,3 |
| PH | 5,4 | 5,2 |
| Ca/ESD (%) | 1,34 | 2,91 |

### Caractéristiques rhéologiques des fromages obtenus à J+1 :

| Type de fromage | Force à la fracture = force maximale (N) | Déformation à la fracture (%) | Pente à l'origine |
|---|---|---|---|
| Etat de la technique s0 | 53 ± 6,9 | 68,5 ± 0,6 (16,4 s) | 1,4 ± 0,14 |
| Exemple 1 s0 | 21,3 ± 1,2 | ≥ 75% ± 0 (18 s) | 0,06 ± 0,01 |
| Etat de la technique s+3 | 24 ± 4,4 | ≥ 75% ± 0 (18 s) | 0,07 ± 0,01 |

### EXEMPLE 2

On prépare un produit fromager de type pâte pressée.

Pour ce faire, on acidifie à 30° C à un pH de 5,4 avec de l'acide lactique. On y ajoute un concentré enzymatique pour l'affinage.

On coagule le lait pendant 10 min par ajout de 0,015% de présure de force 1/10000^{ème} de manière à obtenir un coagulum que l'on découpe en morceaux et que l'on brasse en cuve. On réalise ainsi des grains de caillé.

Depuis l'étape de coagulation jusqu'à l'étape de soutirage, on maintient la température du milieu à 30° C.

On sépare ensuite le sérum du grain de caillé de manière à obtenir un pain de caillé que l'on découpe en unités de 200 g.

On presse les unités de 200 g pendant 30 min. Ensuite ces fromages de type pâtes pressées sont baignés dans une solution de saumure pendant 2 h 30.

Après 12 h de séchage à 12° C, ces fromages sont paraffinés et conservés à 4° C.

Les fromages obtenus ont les caractéristiques physico-chimiques suivantes :

| | Exemple 2 | Procédé de l'état de la technique (voie traditionnelle) |
|---|---|---|
| EST (g/100 g) | 55,1 | 54,5 |
| MG (g/100 g) | 28 | 28,3 |
| PH | 5,45 | 5,2 |
| Ca/ESD (%) | 1,2 | 2,91 |

### Caractéristiques rhéologiques des fromages obtenus à J+1 :

| Type de fromage | Force à la fracture = force maximale (N) | Déformation à la fracture (%) | Pente à l'origine |
|---|---|---|---|
| Etat de la technique s0 | 53 ± 6,9 | 68,5 ± 0,6 (16,4 s) | 1,4 ± 0,14 |
| Exemple 2 s0 | 44 ± 4,83 | ≥ 75% ± 0 (18 s) | 0,59 ± 0,08 |
| Etat de la technique s+3 | 24 ± 4,4 | ≥ 75% ± 0 (18 s) | 0,07 ± 0,01 |

### EXEMPLE 3

On prépare un produit fromager à type pâte souple, élastique.

Pour ce faire, on fermente le lait pendant 7 h à 25° C à un pH de 6,0 avec 2% de ferments mésophiles.

On traite thermiquement le lait fermenté ainsi obtenu à 55° C pendant 1 min. On ajoute ensuite de l'acide lactique de manière à obtenir un lait à pH 5,45.

On coagule le lait pendant 30 min par ajout de 0,01% de présure de force 1/10000^{ème} de manière à obtenir un coagulum que l'on découpe en morceaux. On laisse les grains de caillé ainsi formés au repos pendant 20 min. Un brassage lent de 1 min est effectué 10 min après tranchage.

Depuis l'étape de coagulation jusqu'à l'étape de soutirage, on maintient la température du milieu à 34° C.

On moule à la louche les grains de caillé ainsi obtenus pour extraire le sérum et ainsi former des unités de 200 g.

On saumure pendant 25 min ces fromages de type pâtes molles, après 6 h d'égouttage à 30° C.

Après 12 h de séchage à 12° C, on ensemence une microflore par frottage de la surface des fromages.

Les fromages obtenus sont alors affinés à 12° C puis emballés et conservés à 4° C.

Ces fromages ont les caractéristiques physico-chimiques suivantes :

### Caractéristiques chimiques des fromages obtenus sortie saumure:

| | |
|---|---|
| EST (g/100 g) | 40 |
| MG (g/100 g) | 20,01 |
| PH | 5,55 |
| Ca/ESD (%) | 1,4 |

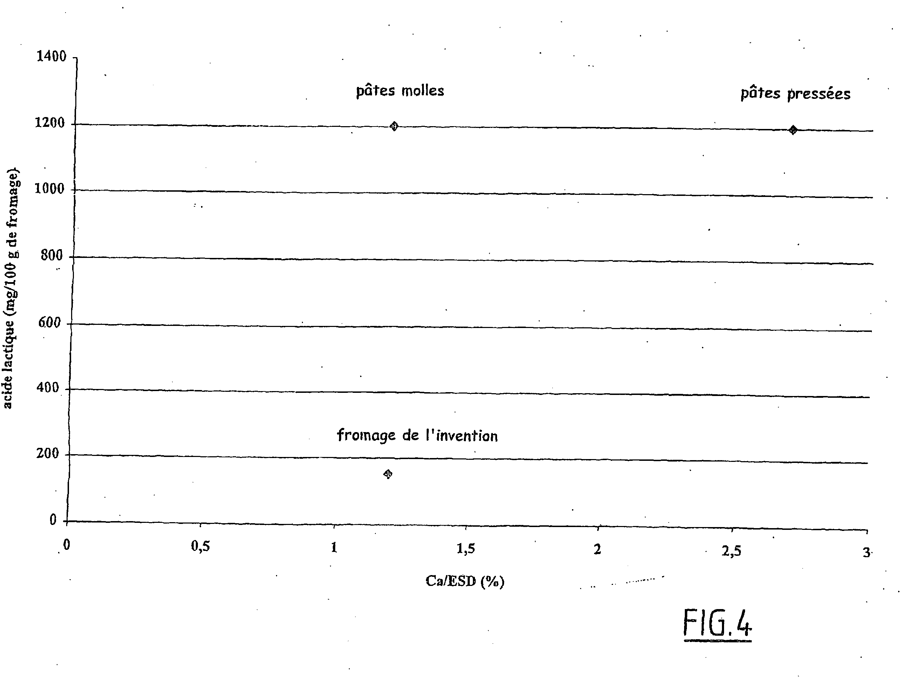

Les fromages obtenus se caractérisent par un rapport Ca/ESD proche de celui des fromages à pâte molle, et une consommation d'acide lactique nettement plus faible que celle des fromages à pâte molle et à pâte pressée (figure 4).

Le pouvoir tampon des fromages est substantiellement plus faible que celui des fromages à pâte pressée comme l'atteste le décalage vers le bas de la courbe d'alcalinisation (figure 5).

### EXEMPLE 4

On utilise une matière première obtenue dans l'exemple 2 avant paraffinage, on réalise un mélange comprenant 80 % de cette matière première à laquelle on rajoute 19,5 % de caillé de chèvre (dont les caractéristiques sont les suivantes : ES= 40 %, G/S = 45 %, pH = 4, 80) et 0,5 % d'arôme de chèvre.

Le mélange est broyé et traité thermiquement à 60°C en Cutter Stephan (marque déposée) à une vitesse de 500 t/min. Le produit est ensuite refroidi à 42°C en cutter à une vitesse de 200 t/min et le produit est moulé en blocs de 200 g puis emballé sous papier paraffiné.

Les caractéristiques du produit fin sont les suivantes: ES= 51 %, GIS = 45% , pH = 5,30.

### EXEMPLE 5

On utilise une matière première fabriquée selon l'exemple 2 avant paraffinage. On réalise un mélange comprenant 90 % de cette matière première broyée, 9 % de yaourt (ES= 10 %, G/S= 3 %) et 1 % de graines de tournesol débactérisées.

Le mélange est traité thermiquement à 52°C en cutter à une vitesse de 500 t/min, puis refroidi à 45°C en cutter à une vitesse de 200 t/min et moulé sur une formatrice de type cmt. Le produit obtenu se présente sous forme de boules de 30 g qui sont enrobées de cire.

### EXEMPLE 6

On utilise une matière première (A) fabriquée selon l'exemple 2 avant paraffinage. Par ailleurs, on réalise un fromage fondu à base de Munster âgé de 6 semaines : la fonte est réalisée en cutter à une température de 105°C maintenue pendant 60 s. puis le produit est refroidi à 80°C, moulé en bloc et refroidi à 5°C. Le produit fini (B) présente les caractéristiques suivantes : ES= 40 %, GIS = 48 % et pH = 5,40.

Les deux ingrédients sont broyés et mélangés dans les proportions suivantes : 90 % de matière première (A) et 10 % de produit (B) et traités en cutter à 55°C sous agitation de 500 t/min. Le produit est refroidi en cutter à 48°C à une vitesse de 200 t/min puis moulé en blocs de 500 g.

## Revendications

1. Procédé de fabrication de fromages à texture souple, élastique comprenant les étapes consistant à:
a) obtenir une base fromagère constituée par un produit fromager âgé de 1 à 7 jours, ayant un extrait sec total compris entre 40 et 60%, un taux de minéralisation Ca/ESD inférieur à 2% et une pâte souple élastique, non friable, présentant un profil rhéologique qui est sensiblement similaire à celui des fromages à pâte pressée, par un procédé comprenant les étapes consistant à acidifier un lait pour atteindre une valeur de pH comprise entre 5,2 et 5,8 et à réaliser la coagulation par addition au lait d'une préparation enzymatique coagulante à ladite valeur de pH, ledit procédé ne comprenant pas d'étape d'acidification de type cheddarisation ni d'étape supplémentaire d'acidification sur le caillé;
b) traiter thermiquement et mécaniquement par un traitement mécanique de type pétrissage, la base fromagère à une température T₁ d'au plus 70°C ;
c) refroidir à une température T₂ comprise entre T₁ - 8°C et T₁ - 20°C.

2. Procédé selon la revendication 1, dans lequel, dans l'étape a), le lait est acidifié pour atteindre une valeur de pH comprise entre 5,2 et 5,5.

3. Procédé selon la revendication 1 ou 2, **caractérisé en ce qu'**après l'étape de coagulation, le procédé de l'étape a) comprend les étapes d'égouttage, moulage, saumurage et éventuellement affinage.

4. Procédé selon l'une quelconque des revendications 1 à 3, **caractérisé en ce que**, dans l'étape a), l'acidification du lait est réalisée par les étapes suivantes:
- addition d'une quantité comprise entre 1 à 3% en poids de bactéries acidifiantes mésophiles et/ou thermophiles, par rapport au poids total de lait, que l'on laisse agir pendant une durée comprise entre 30 min et 10 heures jusqu'à obtention d'un pH de 5,6-6,0,
- blocage du développement des ferments lactiques par un traitement thermique ou athermique, puis
- addition d'un agent acidifiant compatible avec l'alimentation jusqu'à obtention d'un pH compris entre 5,2 et 5,8, ou entre 5,2 et 5,5.

5. Procédé selon l'une quelconque des revendications 1 à 3, **caractérisé en ce que**, dans l'étape a), l'acidification du lait est réalisée par une addition dans un rétentat laitier d'une quantité de perméat laitier préalablement acidifié à pH 4-5 jusqu'à obtention du pH désiré compris entre 5,2 et 5,8 ou entre 5,2 et 5,5.

6. Procédé selon l'une quelconque des revendications 1 à 3, **caractérisé en ce que**, dans l'étape a), l'acidification du lait est réalisée par une addition d'une quantité comprise entre 0,2 et 0,5 % en poids par rapport au poids total du lait, d'un acide organique compatible avec l'alimentation, jusqu'à obtention d'un pH compris entre 5,2 et 5,8, ou entre 5,2 et 5,5.

7. Procédé selon l'une quelconque des revendications 1 à 6, **caractérisé en ce que**, dans l'étape a), on ajoute au lait, après l'étape d'acidification, une quantité de présure comprise entre 8 et 35 ml/100 1 de lait

8. Procédé selon l'une quelconque des revendications 1 à 7, dans lequel on ajoute à la base fromagère, avant l'étape b), des éléments tels que des composés aromatiques, des éléments nutritionnels, des éléments figurés, des fromages de type pâte pressée, pâte molle, fromage fondu, fromage frais, des yaourts, des caillés frais, afin de conférer au produit final les caractéristiques aromatiques de ces éléments.

9. Procédé selon l'une quelconque des revendications 1 à 8, dans lequel on réalise en outre une mise en forme et/ou un conditionnement du produit obtenu à l'issue de l'étape c).

10. Procédé selon l'une quelconque des revendications 1 à 9, dans lequel la température de traitement thermique T₁ est comprise entre 40 et 70°C.

11. Procédé selon l'une quelconque des revendications 1 à 10, dans lequel le traitement mécanique est effectué avec une vitesse de brassage comprise entre 100 et 600 t/min. avec une vitesse de cisaillement comprise entre 10 et 200 s⁻¹.

12. Procédé selon l'une quelconque des revendications 1 à 11, dans lequel l'étape de refroidissement c) est réalisée à une température comprise entre 25 et 50°C.

13. Procédé selon l'une quelconque des revendications 1 à 12, comprenant en outre la mise en forme du produit final et/ou le conditionnement du produit final,

## Claims

1. Process for the production of cheeses of soft flexible texture comprising the steps of:
a) obtaining a cheese base formed by a cheese product aged 1 to 7 days having a total dry extract in the range of between 40 and 60%, a Ca/ESD mineralisation rate of less than 2% and a soft flexible non-crumbly structure, having a rheological profile essentially similar to that of pressed cheeses, by a process comprising the steps of acidifying milk to reach a pH value of between 5.2 and 5.8 and causing the coagulation by adding a coagulating enzyme preparation at said pH value to the milk, wherein said process does not include a cheddarisation acidification step or any additional acidification step on the curds;
b) thermally and mechanically treating the cheese base at a temperature T₁ of 70°C at maximum using a kneading type mechanical treatment;
c) cooling to a temperature T₂ of between T₁ - 8°C and T₁ - 20°C.

2. Process according to claim 1, in which in step a) the milk is acidified to reach a pH value of between 5.2 and 5.5.

3. Process according to claim 1 or 2, **characterised in that** after the coagulation step, the process of step a) includes the steps of draining, moulding, brining and possibly maturing.

4. Process according to any one of claims 1 to 3, **characterised in that** in step a) the acidification of the milk is conducted by the following steps:
• adding a quantity of between 1 and 3% by weight of mesophilic and/or thermophilic acidifying bacteria, in relation to the total weight of milk, which are allowed to act for a period of between 30 mins and 10 hours until a pH of 5.6-6.0 is obtained,
• arresting the development of the lactic ferments by a thermal or non-thermal treatment, then
• adding a food compatible acidifying agent until a pH of between 5.2 and 5.8 or between 5.2 and 5.5 is obtained.

5. Process according to any one of claims 1 to 3, **characterised in that** in step a) the acidification of the milk is achieved by adding to a milk retentate a quantity of milk permeate already acidified to pH 4-5 until the desired pH in the range of between 5.2 and 5.8 or between 5.2 and 5.5 is obtained.

6. Process according to any one of claims 1 to 3, **characterised in that** in step a) the acidification of the milk is achieved by adding a quantity of between 0.2 and 0.5 % by weight in relation to the total weight of the milk of a food compatible organic acid until a pH in the range of between 5.2 and 5.8 or between 5.2 and 5.5 is obtained.

7. Process according to any one of claims 1 to 6, **characterised in that** in step a) a quantity of rennet of between 8 and 35 ml/100 1 of milk is added to the milk after the acidification step.

8. Process according to any one of claims 1 to 7, **characterised in that** elements such as aromatic compounds, nutritional elements, formed elements, pressed, soft type cheeses, melted cheese, fresh cheese, yoghurts, fresh curds, are added to the cheese base before step b) to provide the final product with the aromatic characteristics of these elements.

9. Process according to any one of claims 1 to 8, in which the product obtained at the end of step c) is additionally moulded and/or shaped.

10. Process according to any one of claims 1 to 9, in which the temperature of the thermal treatment T₁ lies between 40 and 70°C.

11. Process according to any one of claims 1 to 10, in which the mechanical treatment is conducted at an agitating speed of between 100 and 600 t/mins at a cutting speed of between 10 and 200 s⁻¹.

12. Process according to any one of claims 1 to 11, in which the cooling step c) is conducted at a temperature in the range of between 25 and 50°C.

13. Process according to any one of claims 1 to 12, additionally comprising moulding of the final product and/or shaping of the final product.

## Patentansprüche

1. Verfahren zur Herstellung von Käsen mit elastischer, nachgiebiger Textur, das die Schritte umfasst, die darin bestehen:
a) eine Käsebasis, die durch ein 1 bis 7 Tage gealtertes Käseprodukt gebildet ist und ein Gesamttrockenextrakt im Bereich von 40 bis 60 %, einen Mineralanteil von Ca/ESD von weniger als 2 % und eine nicht krümelige, elastische nachgiebige Masse, die ein rheologisches Profil hat, das im Wesentlichen jenem von Käsen mit gepresster Masse ähnlich ist, besitzt, durch ein Verfahren zu erhalten, das die Schritte enthält, die darin bestehen, eine Milch zu säuern, um einen pH-Wert im Bereich von 5,2 bis 5,8 zu erhalten, und die Koagulation durch Hinzufügung einer bei dem pH-Wert koagulierenden enzymatischen Zubereitung zu der Milch zu verwirklichen, wobei das Verfahren weder einen Säuerungsschritt des Typs Cheddarisation noch einen zusätzlichen Säuerungsschritt an der Sauermilch enthält;
b) die Käsebasis bei einer Temperatur T₁ von höchstens 70 °C thermisch und durch eine mechanische Behandlung des Knettyps mechanisch zu behandeln;
c) auf eine Temperatur T₂, die im Bereich von T₁ -8 °C bis T₁ -20 °C liegt, abzukühlen.

2. Verfahren nach Anspruch 1, in dem im Schritt a) die Milch gesäuert wird, um einen pH-Wert im Bereich von 5,2 bis 5,5 zu erhalten.

3. Verfahren nach Anspruch 1 oder 2, **dadurch gekennzeichnet, dass** nach dem Koagulationsschritt das Verfahren des Schrittes a) die Schritte des Abtropfens, des Abgießens, des Einlegens in Lake und eventuell des Klärens umfasst.

4. Verfahren nach einem der Ansprüche 1 bis 3, **dadurch gekennzeichnet, dass** im Schritt a) die Säuerung der Milch durch die folgenden Schritte verwirklicht wird:
- Hinzufügen einer Menge im Bereich von 1 bis 3 Gew.-% mesophiler und/oder thermophiler säurebildender Bakterien in Bezug auf das Gesamtgewicht der Milch, die während einer Dauer im Bereich von 30 Min. bis 10 Stunden wirken können, bis ein pH-Wert von 5,6-6,0 erhalten wird,
- Blockieren der Entwicklung von Milchfermenten durch eine thermische oder nicht thermische Behandlung, dann
- Hinzufügen eines Säurebildungsmittels, das mit Lebensmitteln verträglich ist, bis ein pH-Wert im Bereich von 5,2 bis 5,8 oder von 5,2 bis 5,5 erhalten wird.

5. Verfahren nach einem der Ansprüche 1 bis 3, **dadurch gekennzeichnet, dass** im Schritt a) die Säuerung der Milch durch Hinzufügung einer Menge eines im Voraus auf einen pH-Wert von 4-5 gesäuerten Milchpermeats in einem Milchproduktretentat, bis der gewünschte pH-Wert im Bereich von 5,2 bis 5,8 oder von 5,2 bis 5,5 erhalten wird.

6. Verfahren nach einem der Ansprüche 1 bis 3, **dadurch gekennzeichnet, dass** im Schritt a) die Säuerung der Milch durch Hinzufügung einer Menge im Bereich von 0,2 bis 0,5 Gew.-% in Bezug auf das Gesamtgewicht der Milch einer organischen Säure, die mit Lebensmitteln verträglich ist, bis ein pH-Wert im Bereich von 5,2 bis 5,8 oder von 5,2 bis 5,5 erhalten wird, verwirklicht wird.

7. Verfahren nach einem der Ansprüche 1 bis 6, **dadurch gekennzeichnet, dass** im Schritt a) zu der Milch nach dem Säuerungsschritt eine Menge an Lab im Bereich von 8 bis 35 ml pro 1001 Milch hinzugefügt wird.

8. Verfahren nach einem der Ansprüche 1 bis 7, bei dem zu der Käsebasis vor dem Schritt b) Elemente wie etwa aromatische Zusammensetzungen, Nahrungselemente, Formungselemente, Käse des Pressmassetyps, Weichmasse, Schmelzkäse, Frischkäse, Yoghurt oder saure Milch hinzugefügt werden, um dem Endprodukt die aromatischen Eigenschaften dieser Elemente zu verleihen.

9. Verfahren nach einem der Ansprüche 1 bis 8, in dem außerdem eine Formung und/oder eine Verpackung des am Ende des Schrittes c) erhaltenen Produkts verwirklicht werden.

10. Verfahren nach einem der Ansprüche 1 bis 9, in dem die Temperatur T₁ der Wärmebehandlung im Bereich von 40 bis 70 °C liegt.

11. Verfahren nach einem der Ansprüche 1 bis 10, in dem die mechanische Behandlung mit einer Vermischungsgeschwindigkeit im Bereich von 100 bis 600 min⁻¹ mit einer Schergeschwindigkeit im Bereich von 10 bis 200 s⁻¹ ausgeführt wird.

12. Verfahren nach einem der Ansprüche 1 bis 11, in dem der Abkühlungsschritt c) bei einer Temperatur im Bereich von 25 bis 50 °C ausgeführt wird.

13. Verfahren nach einem der Ansprüche 1 bis 12, das außerdem die Formung des Endprodukts und/oder die Verpackung des Endprodukts umfasst.
